# FASCICULE DE BREVET EUROPEEN

(11) **EP 0 445 479 B1**
(45) Date de publication et mention de la délivrance du brevet: **26.07.1995**
(21) Numéro de dépôt: 90403617.5
(22) Date de dépôt: 14.12.1990
(51) Int. Cl.: G06F 3/06, G06F 13/12

(54) **Sous-système périphérique de mémoire de masse**
Peripheres Massenspeichersubsystem
Mass storage peripheral subsystem

(30) Priorité: 08.03.1990 FR 9002962
(43) Date de publication de la demande: 11.09.1991
(73) Titulaire: BULL S.A., 92800 Puteaux (FR)
(72) Inventeur: Carteau, Daniel, F-78180 Montigny Le Bretonneux (FR); Schreck, Philippe, F-78310 Maurepas (FR); Giacomini, Patricia, F-78390 Bois D'Arcy (FR)
(74) Mandataire: Gouesmel, Daniel

(56) Documents cités:
- EP-A- 0 029 394
- EP-A- 0 287 301
- DE-A- 3 801 547
- US-A- 4 747 047
- IBM TECHNICAL DISCLOSURE BULLETIN. vol. 26, no. 7b, décembre 1983, NEW YORK US, pages 3820-3821; H.O. Hempy: "Multipathing in peripheral storage systems"

## Description

La présente invention concerne un sous-système périphérique de mémoire de masse. Elle a trait plus particulièrement à l'architecture matérielle et micrologicielle de celui-ci et est applicable à tous les types de système informatique.

On sait qu'un système informatique est constitué d'au moins une unité centrale, qu'on appelle encore hôte central, formée d'au moins un processeur central et une mémoire principale à laquelle ce processeur est relié, d'une pluralité d'organes périphériques, et d'au moins un processeur d'entrée/sortie assurant le contrôle de l'échange des données entre la mémoire principale et les différents organes périphériques.

Des unités de contrôle de périphériques, encore appelées contrôleurs, sont associées aux différents organes périphériques et assurent le transfert physique des données entre l'hôte central et les périphériques associés à ces différents contrôleurs.

Généralement, dans un même lieu géographique, tous les éléments constitutifs fonctionnels d'un système informatique sont reliés à un même bus de type parallèle qui assure le transport des données entre les différentes cartes portant ces éléments et l'alimentation électrique de celle-ci.

Un bus plus particulièrement utilisé dans la pratique courante est le bus appelé Multibus II (marque déposée par la Société Intel). Son architecture est structurée autour d'un bus principal de type parallèle normalisé selon la norme IEEE 1296 (Institute of Electrical and Electronic Engineers).

Parmi les organes périphériques les plus utilisés, on relève les mémoires de masse telles que les mémoires à disques magnétiques rotatifs, ou encore les mémoires à disques optiques. Elles sont très largement utilisées car elles permettent d'emmagasiner de très grandes quantités d'informations et d'y accéder relativement rapidement. Leur temps d'accès moyen est de l'ordre de 20 à 25 millisecondes. Les capacités des mémoires à disques du marché les plus performantes dépassent le gigaoctet.

Parmi les mémoires de masse, on développe actuellement des mémoires dites électroniques, ou encore disque électronique (solid state disc, en anglais) utilisant des mémoires semiconducteur. Leur temps d'accès est largement inférieur à la milliseconde (c'est-à-dire quelques dizaines de fois inférieur au temps d'accès des mémoires à disques rotatifs les plus performantes) et elles ne comportent pas de partie rotative. Toutefois, le coût de capacité mémoire unitaire de celles-ci reste élevé, de l'ordre d'une vingtaine de fois supérieur à celui des mémoires à disques magnétiques. Cependant, le coût de la capacité mémoire unitaire des mémoires électroniques diminue beaucoup plus rapidement que celui des mémoires à disques magnétiques rotatifs et on peut penser que ce coût sera équivalent d'ici quelques années. On peut donc estimer utile d'utiliser à la fois des mémoires à disques magnétiques rotatifs et des disques électroniques, en tant qu'organes périphériques d'un système informatique.

La structure des systèmes informatiques est de plus en plus complexe et implique toujours plus d'éléments. Par ailleurs, le volume des données à traiter par un tel système est très important et nécessite l'utilisation d'un nombre toujours plus grand de mémoires de masse où doivent être stockées ces données avant d'être traitées par les processeurs centraux du système. Il en résulte que la gestion d'un tel système dans son ensemble par l'unité centrale de celui-ci est extrêmement complexe.

Il est donc souhaitable de décentraliser la gestion de l'ensemble des éléments constituant un système informatique au niveau de plusieurs sous-systèmes gérant chacun une partie des éléments du système, et en particulier les organes périphériques.

C'est précisément l'objet de la présente invention de constituer un sous-système périphérique de mémoire de masse gérant, en lieu et place de l'unité centrale, non seulement le transfert des données de l'unité centrale vers les mémoires de masse, mais aussi l'écriture et la lecture des informations à l'intérieur de celles-ci.

Un tel sous-système doit avoir la meilleure disponibilité possible et permettre d'obtenir de bonnes performances.

Par ailleurs, l'accès aux données doit être totalement sécurisé, c'est-à-dire que l'on doit pouvoir accéder à tout moment, à n'importe laquelle des données contenues dans les mémoires de masse gérées par le sous-système, quelles que soient les circonstances, que ce soit pour une panne, partielle ou totale, ou encore pour des raisons d'entretien et de maintenance, de tout ou partie des éléments du système.

En d'autres termes, l'hôte central doit avoir accès à n'importe laquelle des données contenues dans la mémoire de masse gérée par le sous-système, sans avoir à se préoccuper de la manière dont le sous-système la gère réellement, quels que soient les incidents de fonctionnement qui pourraient affecter ce dernier ou cette dernière. Ceci définit pour l'hôte ce qu'on appelle la disponibilité des données.

On connait du document EP-A-0287301 un sous-système périphérique de mémoire de masse (bandes et disques magnétiques), implanté autour d'un hôte et deux unités de contrôle, gérant les accès par deux bus de type parallèle.

Le sous-système périphérique pour mémoire de masse selon l'invention est caractérisé comme à la revendication 1.

D'autres caractéristiques et avantages de la présente invention apparaîtront dans la description suivante donnée à titre d'exemple non limitatif et en se référant aux dessins annexés.

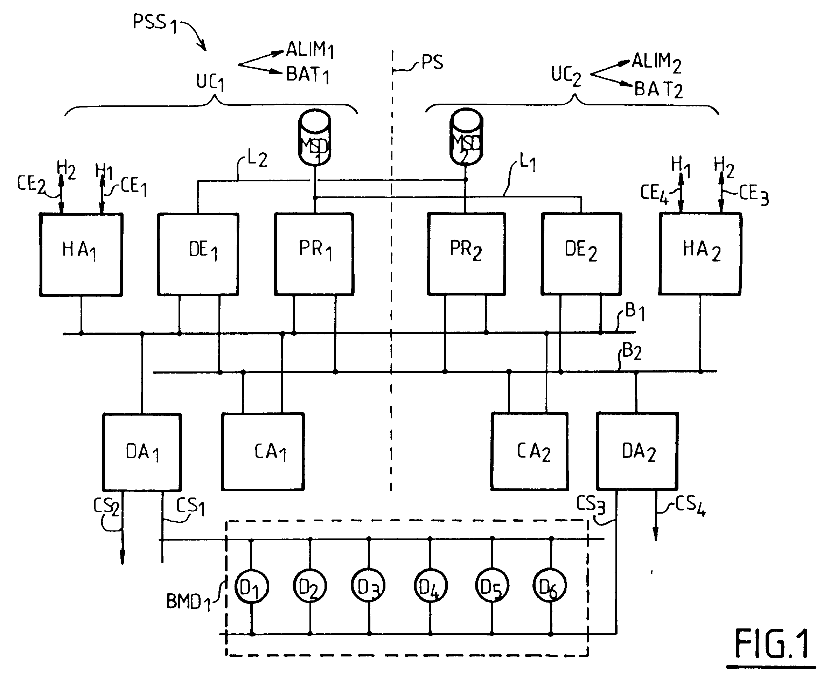

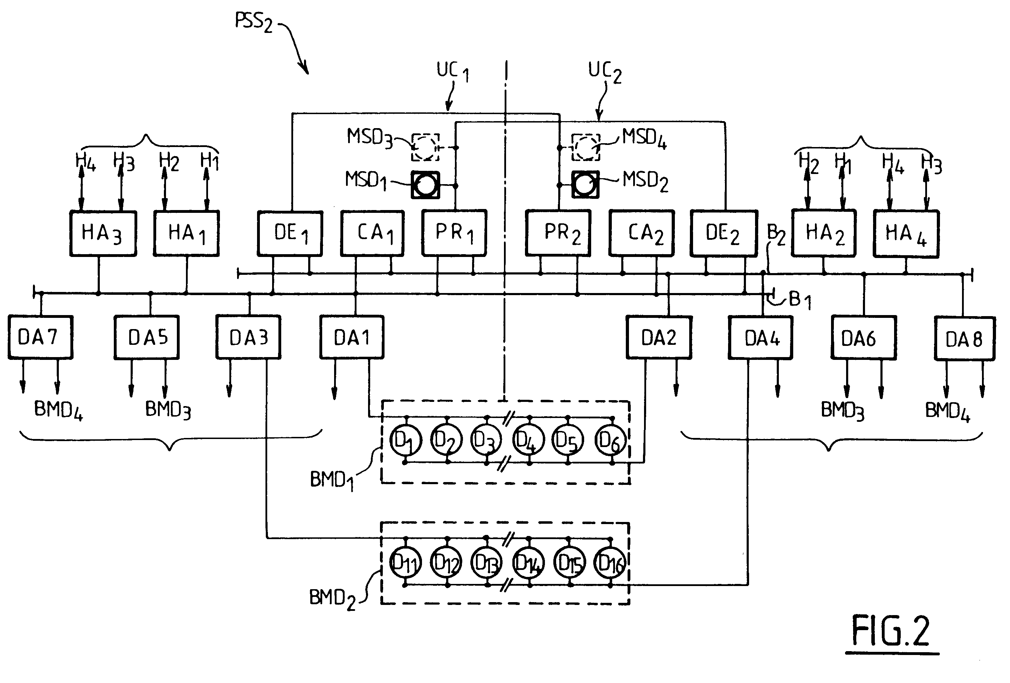

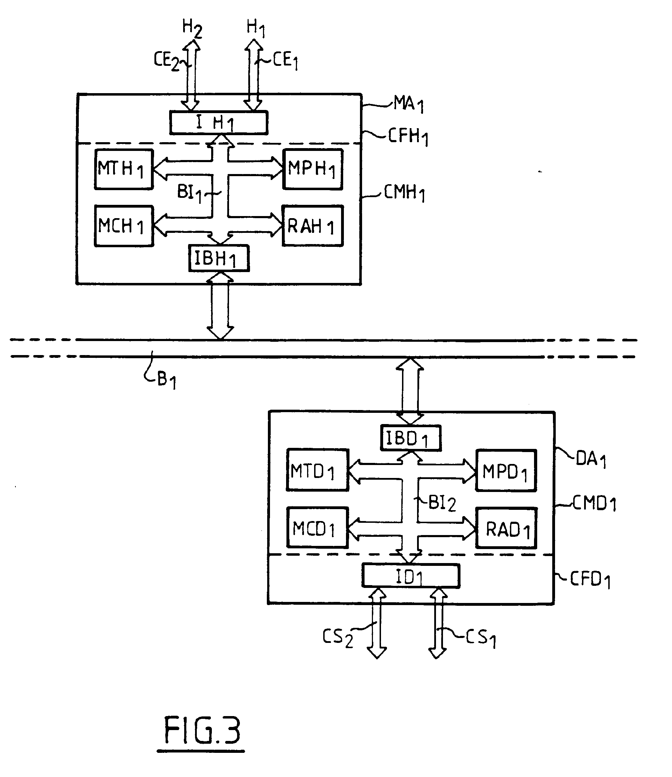

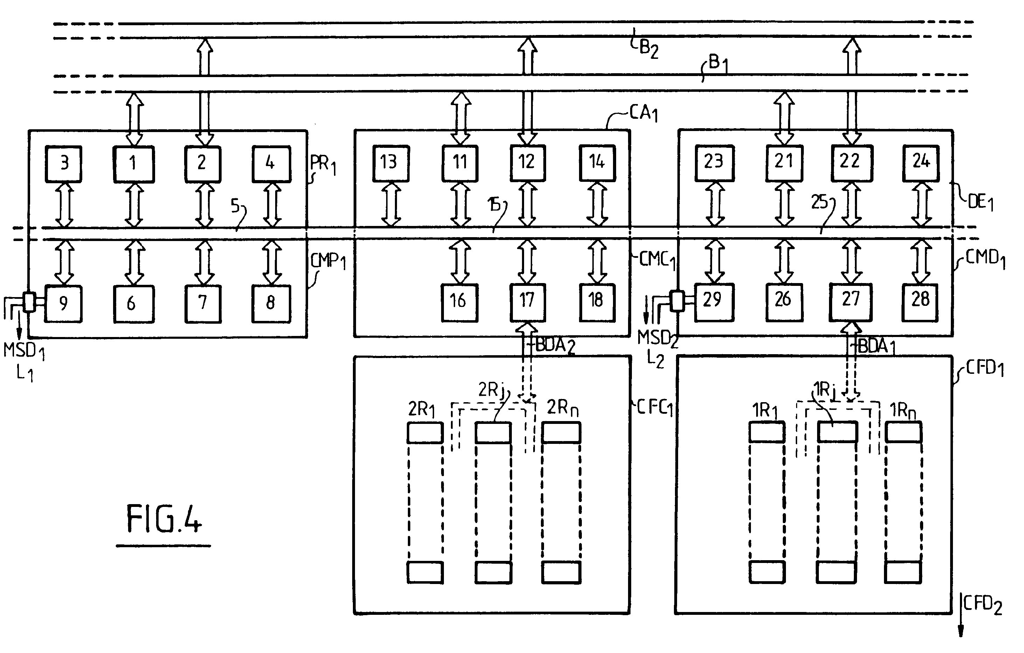

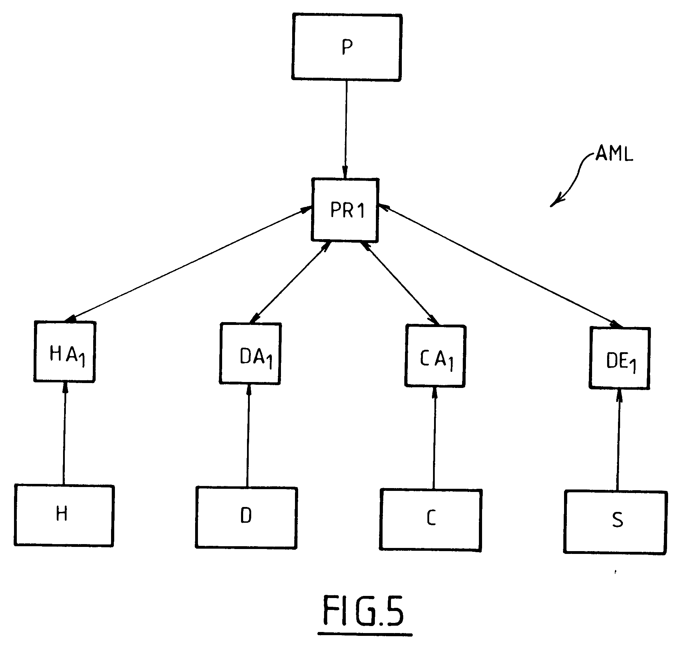

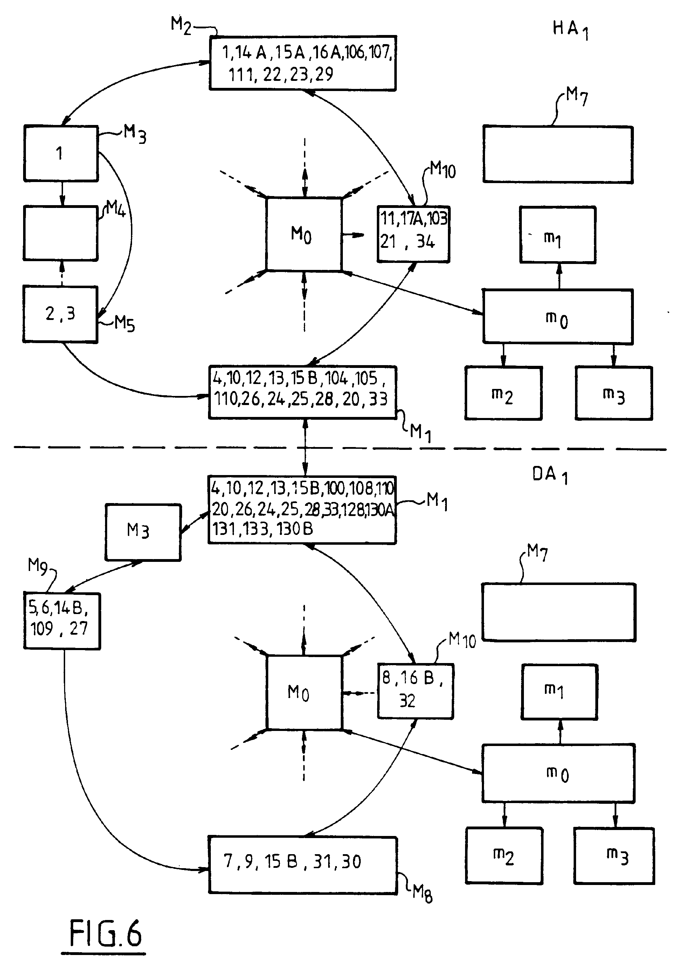

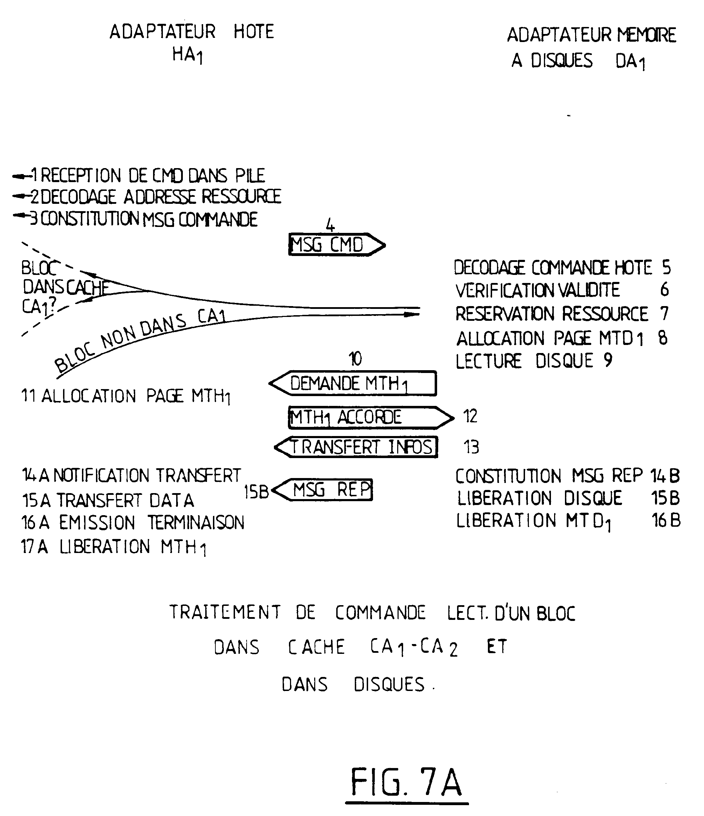

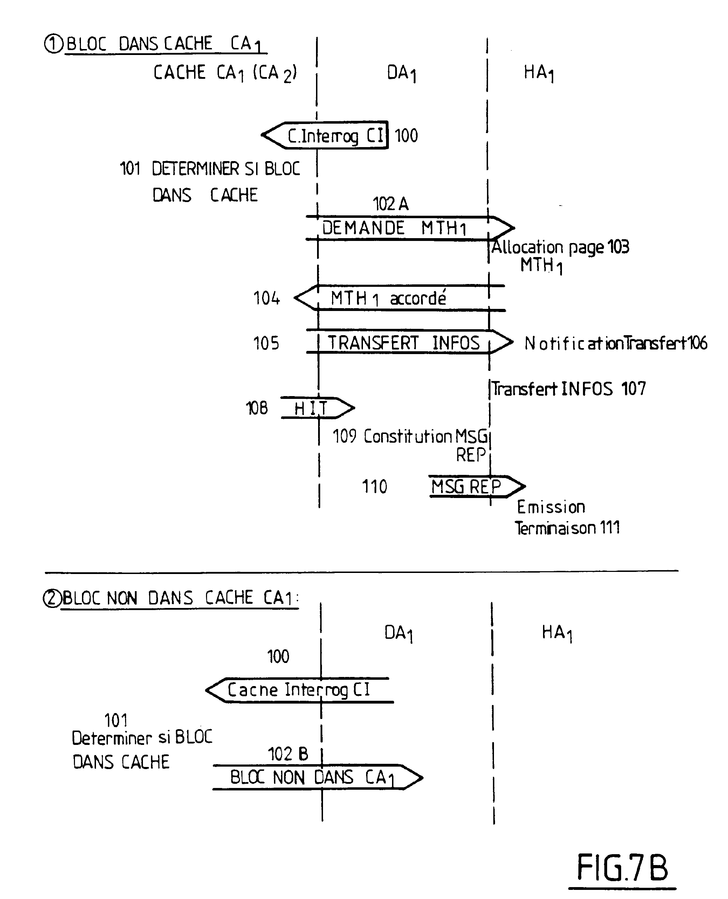

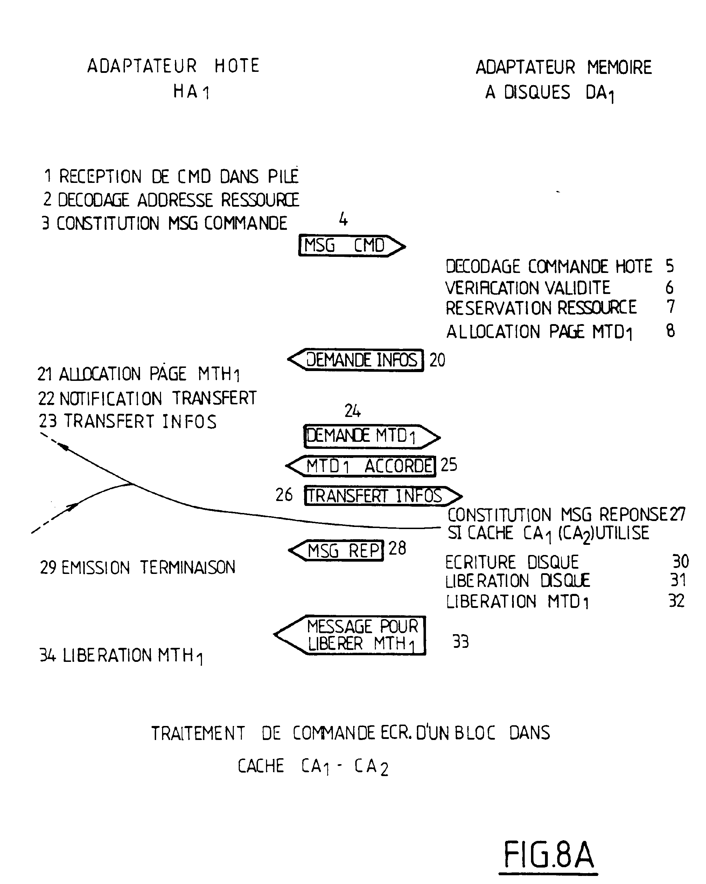

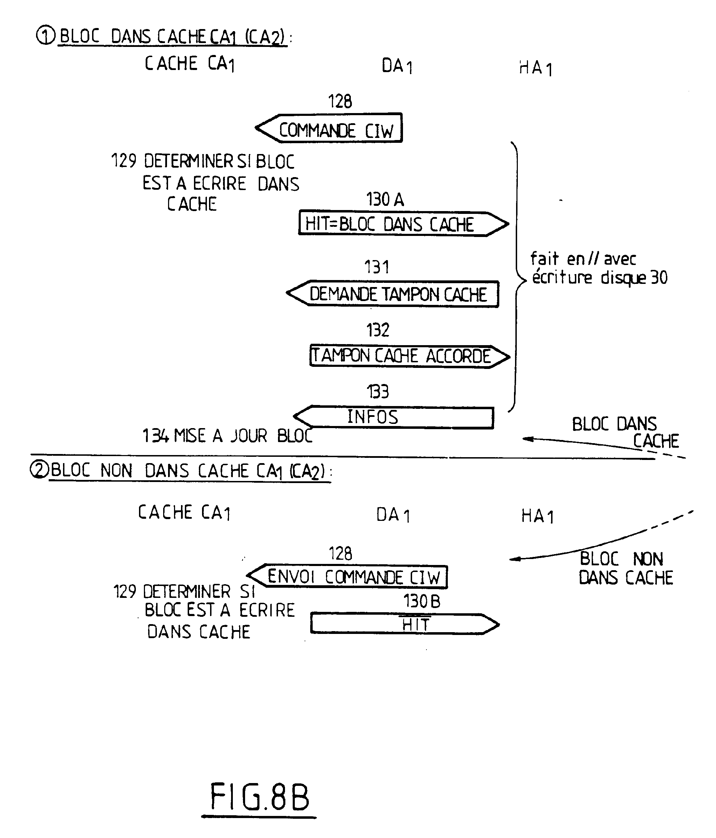

Sur ces dessins :
- ***La* *figure* *1*** montre un premier exemple de réalisation de l'architecture matérielle du sous-système périphérique selon l'invention, dans sa forme la plus simple,
- ***La* *figure* *2*** montre un second exemple de réalisation de l'architecture matérielle du sous-système périphérique selon l'invention, selon l'une de ses formes les plus complexes,
- ***La* *figure* *3*** montre, plus en détail, la structure matérielle des adaptateurs hôte et adaptateurs mémoire,
- ***La* *figure* *4*** montre, plus en détail, la structure matérielle du processeur central, de la mémoire cache, et d'une unité à disque électronique de l'une des deux unités de contrôle du sous-système périphérique selon l'invention,
- ***La* *figure* *5*** montre, comment sont implantés les différents sous-ensembles fonctionnels de l'architecture micrologicielle, sur chacun des éléments matériels constituant une unité de contrôle du sous-système périphérique selon l'invention,
- ***La* *figure* *6*** montre comment sont respectivement composés les sous-ensembles fonctionnels de l'architecture micrologicielle spécifiques aux adaptateurs hôte et adaptateurs mémoire,
- ***La* *figure* *7***, composée des figures 7a et 7b, montre l'organigramme du dialogue entre l'adaptateur hôte et l'adaptateur mémoire à disques, d'une part et entre ces derniers et la mémoire cache d'autre part, qui permet la mise en oeuvre des opérations de lecture d'un bloc de données à la fois dans la mémoire cache et dans l'une des mémoires à disques de la mémoire de masse,
- ***La* *figure* *8***, composée des figures 8a et 8b, montre l'organigramme du dialogue entre l'adaptateur hôte et l'adaptateur mémoire de masse, d'une part et entre ces derniers et la mémoire cache d'autre part, qui permet la mise en oeuvre des opérations d'écriture à la fois dans la mémoire cache et dans la mémoire à disques de la mémoire de masse.

On considère tout d'abord la figure 1 qui montre un premier exemple de réalisation PSS1 du sous-système périphérique de mémoire de masse selon l'invention.

Le sous-système PSS₁ appartient à un système informatique plus vaste comprenant par exemple deux hôtes centraux H₁ et H₂.

Le sous-système PSS₁ comprend, de préférence, deux unités de contrôle identique, à savoir, UC₁ occupant la partie gauche de la figure 1 et UC₂ occupant la partie droite.

L'architecture matérielle du sous-système PSS₁ est construite autour de deux bus identiques, parallèles l'un à l'autre, de préférence de type Multibus II, désignés par B₁ et B₂, ceux-ci présentant une zone centrale où ils sont totalement en regard l'un de l'autre, et deux zones latérales où ils ne sont pas en regard l'un de l'autre.

Les deux unités de contrôle UC₁ et UC₂ sont strictement identiques et symétriques l'une de l'autre par rapport à un plan de symétrie PS.

La première unité de contrôle UC₁ est alimentée en énergie électrique par une première alimentation ALIM₁ et est connectée à une première alimentation en énergie électrique de secours, formée d'une batterie, à savoir BAT₁.

De même, la seconde unité de contrôle UC₂ est alimentée par une seconde alimentation indépendante de la première, à savoir, ALIM₂, et connectée à une seconde alimentation de secours BAT₂.

La première unité de contrôle UC₁ comprend les éléments structurels suivants, un élément structurel étant défini comme la combinaison d'une structure matérielle et du sous-ensemble micrologiciel implémenté sur cette structure :
- un premier processeur central PR₁,
- une unité à disques électroniques DE₁,
- un adaptateur hôte HA₁,
- un adaptateur mémoire de masse (celle-ci est formée d'une batterie BMD₁ de 6 mémoires à disques D₁ à D₆) à savoir DA₁, cet adaptateur étant appelé, ici, pour simplifier, adaptateur disque,
- la mémoire à disques de sauvegarde MSD₁,
- la mémoire cache CA₁.

De même, la seconde unité de contrôle UC₂ comprend le second processeur central PR₂, la seconde unité à disques électroniques DE₂, l'adaptateur hôte HA₂, le second adaptateur disque DA₂, la seconde mémoire à disques de sauvegarde MSD₂, et la seconde mémoire cache CA₂.

Le premier et le second adaptateur disque DA₁ et DA₂ sont reliés par l'intermédiaire respectivement des liaisons CS₁ et CS₃ à une batterie de mémoires à disques BMD₁, dont seulement 6 sont représentées à la figure 2, à savoir les mémoires à disques D₁ à D₆. Ils peuvent également être connectés par l'intermédiaire des liaisons CS₂ et CS₄ à une seconde batterie de mémoires à disques, à savoir BMD₂, non représentée pour simplifier à la figure 2.

Les liaisons CS₁ à CS₄ sont de type IPI-2 normalisées par l'ANSI (American National Standard Institute) et également par l'ISO (International Standard Organization).

Le premier adaptateur hôte HA₁ est relié par l'intermédiaire d'un premier canal de liaison CE₁ à un premier hôte H₁ et par un second canal de liaison CE₂ à un second hôte H₂.

De même, le second adaptateur hôte HA₂ est relié par l'intermédiaire d'un premier canal de liaison CE₃ au second hôte H₂ et par l'intermédiaire d'un second canal de liaison CE₄ au premier hôte H₁.

Dans ce cas, les premiers canaux de liaison CE₁ et CE₃ des premier et second adaptateurs hôte HA₁ et HA₂ sont prioritaires par rapport aux second canaux de liaison CE₂ et CE₄.

Les quatre canaux de liaison CE₁ à CE₄ sont de type IPI-3 normalisé par l'ANSI (et également par l'ISO).

Tous les éléments structurels constitutifs de la première unité de contrôle à savoir PR₁, DE₁, HA₁, DA₁, MSD₁, CA₁ sont identiques, tant du point de vue matériel que micrologiciel, aux éléments correspondants de la seconde unité de contrôle UC₂, à savoir, PR₂, DE₂, HA₂, DA₂, MSD₂, CA₂ et symétriques de ces derniers, par rapport au plan PS.

Les six éléments constitutifs DE₁, DE₂, PR₁, PR₂, CA₁, CA₂ sont connectés simultanément aux deux bus B₁ et B₂ dans la partie centrale de ceux-ci où ils sont en regard l'un de l'autre.

Les éléments constitutifs HA₁ et DA₁ de la première unité de contrôle UC₁ sont connectés au premier bus B₁ alors que les éléments correspondants HA₂ et DA₂ de la seconde unité de contrôle UC₂ le sont au second bus B₂.

La première mémoire à disques de sauvegarde MSD₁ est reliée d'une part au premier processeur central PR₁ et d'autre part à la seconde unité à disques électroniques DE₂, par la liaison L₁, de type SCSI.

De même, la seconde mémoire à disques de sauvegarde MSD₂ est connectée à la fois au second processeur central PR₂ et à la première unité à disques électroniques DE₁ par la liaison L₂ de type SCSI. Ainsi, les deux mémoires à disques de sauvegarde MSD₁ et MSD₂ sont accessibles à la fois par la première et la seconde unité de contrôle UC₁ et UC₂.

Les deux mémoires à disques de sauvegarde sont alimentées en tension électrique par un circuit OU dont deux entrées sont reliées respectivement aux alimentations ALIM₁ et ALIM₂ (non représenté pour simplifier à la figure 1.

Le second exemple de réalisation du sous-système périphérique de mémoire de masse selon l'invention, à savoir PSS₂ montré à la figure 2 est une version élargie et plus puissante du premier exemple PSS₁ montrée à la figure 1. Elle est supposée être construite également autour des deux bus B₁ et B₂. Il comprend également deux unités de contrôle identiques UC₁ et UC₂. Chacune de celles-ci comprend les éléments PR₁, DE₁, CA₁, MSD₁, DA₁, HA₁ (unité UC₁) et PR₂, DE₂, CA₂, MSD₂, DA₂, HA₂ (UC₂), qui ont exactement la même dénomination que les éléments correspondants de la figure 1 et dont le rôle et la fonction sont strictement identiques. La batterie de mémoires à disques BMD₁, composée des 6 mémoires à disques D₁ à D₆ est connectée aux deux adaptateurs disque DA₁ et DA₂, de la même façon qu'à la figure 1.

La première unité de contrôle UC₁ comprend, en outre, l'adaptateur hôte HA₃ et les 3 adaptateurs disque DA₃, DA₅, DA₇.

De même, la seconde unité de contrôle UC₂ comprend en outre, l'adaptateur hôte HA₄ et les 3 adaptateurs disque DA₄, DA₆, DA₈.

Les adaptateurs hôte HA₁, HA₃, les 4 adaptateurs disque DA₁, DA₃, DA₅, DA₇ sont connectés au bus B₂, alors que les adaptateurs hôte HA₂, HA₄ et les adaptateurs disque DA₂, DA₄, DA₆, DA₈, le sont au bus B₁.

Il est clair que les autres éléments déjà mentionnés, à savoir les processeurs centraux PR₁, PR₂, les mémoires cache CA₁, CA₂, les unités à disques électroniques DE₁, DE₂, sont connectés simultanément aux deux bus B₁ et B₂.

Les deux adaptateurs disque DA₃ et DA₄ sont connectés à la batterie de mémoires à disques BMD₂ formée par exemple de 6 mémoires à disques D₁₁ à D₁₆.

De même, les adaptateurs disque DA₅ et DA₆, d'une part, DA₇ et DA₈ d'autre part sont respectivement connectés aux batteries de mémoires à disques BMD₃ et BMD₄ formées respectivement par exemple des 6 mémoires à disques D₂₁ à D₂₆ et D₃₁ à D₃₆, non représentées pour simplifier la figure 2..

Dans le cas où le nombre des mémoires à disques connectées aux adaptateurs disque est suffisamment important, les unités de contrôle UC₁ et UC₂ peuvent comprendre en outre des mémoires à disques de sauvegarde supplémentaires, par exemple, MSD₃ et MSD₄, connectées respectivement d'une part au premier processeur central PR₁ et à la seconde unité à disques électroniques DE₂, et d'autre part au second processeur central PR₂ et à la première unité à disques électroniques DE₁.

Il est clair que le sous-système périphérique selon l'invention peut comporter d'autres adaptateurs hôte et d'autres adaptateurs disque que ceux montrés à la figure 2, ces adaptateurs disque supplémentaires étant connectés soit à d'autres batteries de mémoires à disques magnétiques soit par exemple à des batteries de mémoires à disques optiques ou encore des dérouleurs de bandes ou encore des mémoires à disques magnétooptiques. En d'autres termes, le sous-système périphérique de mémoire de masse selon l'invention peut comporter un grand nombre de configurations possibles et gérer des mémoires de masse d'une capacité mémoire considérable.

On voit que chacune des mémoires à disques du sous-système selon l'invention est à double accès (soit par l'intermédiaire des adaptateurs hôte et disque de UC₁, soit de UC₂). Par ailleurs, le fait que chacune des unités UC₁ et UC₂ est identique et reliée aux deux bus B₁ et B₂ les rend interchangeables. Il en résulte que si l'un des éléments structurels de UC₁ est indisponible (ceci étant dû par exemple à une défectuosité totale ou partielle, à la maintenance, à un remplacement), c'est l'élément correspondant de UC₂ qui le remplace. De même, si l'une des unités UC₁ ou UC₂ est indisponible (alimentation coupée, opération de maintenance) c'est l'autre unité qui prend le relais. On voit que la structure du sous-système périphérique selon l'invention (matérielle + micrologicielle), à double multibus II, et parfaitement redondante, assure la sécurisation totale des données, et la disponibilité de celles-ci pour l'hôte central H₁.

La structure matérielle plus détaillée des adaptateurs hôte tels que HA₁ et des adaptateurs disque tels que DA₁ apparaît à la figure 3. Il est clair que la structure matérielle des adaptateurs HA₂ à HA₄ et DA₂ à DA₈ est respectivement tout-à-fait identique à la structure correspondante décrite ci-dessous, pour HA₁ et DA₁.

L'adaptateur hôte HA₁ comprend :
- une interface de liaison IH₁ avec les hôtes centraux H₁ et H₂ par l'intermédiaire des canaux de liaison CE₁ et CE₂, cette interface de liaison étant définie par la norme IPI-3 précitée.
- La mémoire tampon hôte, appelée pour simplifier tampon hôte MTH₁, dont la capacité est dans un exemple de réalisation préféré de l'ordre de 512 à 768 kilooctets,
- le microprocesseur contrôlant le fonctionnement de l'adaptateur hôte, à savoir MPH₁, par exemple un microprocesseur référencé 29 000 de la Société AMD, de type RISC,
- la mémoire de type RAM, à savoir RAH₁ associée au microprocesseur MPH₁, se composant par exemple d'une mémoire de type RAM destinée à recevoir les différentes instructions des modules micrologiciels implémentés dans l'adaptateur hôte HA₁, et une mémoire de type RAM pour les données. Les deux mémoires de type RAM destinées respectivement aux instructions et aux données ont par exemple chacune une capacité de 256 kilooctets,
- le microcontrôleur assurant l'interconnexion de l'adaptateur hôte avec les autres éléments des unités de contrôle par l'intermédiaire du bus B₁, à savoir MCH₁,
- l'interface de connexion IBH₁ avec le bus Multibus II, B₁, définie par la norme IEEE1296 précitée, qui est par exemple constituée par un coprocesseur de type VL 82c389 (fabriqué par la Société INTEL) communiquant par mode message avec les autres éléments constitutifs du sous-système périphérique (PSS₁, PSS₂) selon l'invention.

Tous les éléments constitutifs de l'adaptateur hôte précédemment cités communiquent entre eux par le bus interne BI₁ du microprocesseur MPH₁.

La structure matérielle de l'adaptateur disque DA₁ est similaire à la structure matérielle de l'adaptateur hôte HA₁.

Ainsi, l'adaptateur DA₁ comprend une interface de connexion IBD₁ avec le bus B₁ définie par la norme IEEE1296 précitée, une mémoire tampon MTD₁ pour les données destinées à être écrites dans les mémoires à disques D₁ à D₆ ou provenant de la lecture des données inscrites dans celles-ci, appelée plus simplement tampon disque, le microprocesseur de commande de l'adaptateur disque, à savoir MPD₁, le microcontrôleur d'interconnexion MCD₁, la mémoire de type RAM, à savoir RAD₁ associée au microprocesseur MPD₁, et enfin l'interface ID₁ de liaison avec les batteries de mémoires à disques BMD₁ par l'intermédiaire des canaux de liaison CS₁ et CS₂ (cette interface est définie par la norme IPI-2 précitée).

La structure matérielle des adaptateur hôte et adaptateur disque HA₁ et DA₁ se compose d'une carte-mère et d'une carte-fille.

Ainsi, l'adaptateur hôte HA₁ comprend la carte-mère CMH₁ et la carte-fille CFH₁, alors que l'adaptateur disque DA₁ comprend la carte-mère CMD₁ et la carte-fille CFD₁.

La carte-mère CMH₁ comprend les éléments MTH₁, MPH₁, RAH₁, MCH₁, IBH₁ précités, alors que la carte-mère CMD₁ comprend les éléments MCD₁, MTD₁, RAD₁, MPD₁ et IBD₁.

La carte-fille CFH₁ comprend l'interface IH₁ alors que la carte-fille CFD₁ comprend l'interface ID₁.

On voit que les deux cartes-mères CMH₁ et CMD₁ sont strictement identiques et que par suite, les adaptateurs hôte et disque HA₁ et DA₁ ne diffèrent matériellement que par leurs cartes-filles CFH₁ et CFD₁. Les cartes-mères CMH₁ et CMD₁ sont dites de type monomultibus II, en ce sens qu elles peuvent être connectées à un seul bus de type Multibus II tel que B₁.

La structure matérielle des différents éléments structurels PR₁, CA₁, DE₁ de l'unité de contrôle UC₁ apparaît à la figure 4.

Chacun de ces éléments PR₁, CA₁, DE₁ est formé d'une carte-mère, à savoir respectivement CMP₁, CMC₁, CMD₁ et pour CA₁ et DE₁ d'au moins une carte-fille à savoir respectivement, CMC₁ et CMD₁.

Les différentes cartes-mères CMP₁, CMC₁ et CMD₁ ont une structure matérielle identique.

Ainsi, la carte-mère CMP₁ comprend les composants matériels 1 à 8 tous connectés au bus interne 5, la carte-mère CMC₁ comprend les composants matériels 11 à 18 tous connectés au bus interne 15, alors que la carte-mère CMD₁ comprend les composants matériels 21 à 28 tous connectés au bus interne 25.

Les composants matériels 1 à 8, 11 à 18, 21 à 28 sont respectivement et dans l'ordre indiqué ci-dessus identiques entre eux. Ainsi, les éléments 1, 11, 21 sont identiques, les éléments 2, 12, 22 sont identiques, etc ... . Il suffit donc de décrire quels sont les composants matériels 1 à 8 pour connaître les composants matériels 11 à 18 et 21 à 28.

Les composants l et 2 sont des interfaces de communication avec les bus B₁ et B₂, du même type que les interfaces IBH₁ et IBD₁ précédemment décrites.

Les deux composants 3 et 4 sont des microcontrôleurs d'interconnexion avec les autres éléments constitutifs du sous-système périphérique par l'intermédiaire des bus B₁ et B₂. Ce sont des composants constitués par exemple par des microcontrôleurs de type INTEL 80c32, du même type que les microcontrôleurs MCH₁ et MCD₁ précédemment décrits.

Le composant 6 est le microprocesseur de commande de l'ensemble des composants constituant le processeur central PR₁. Il est constitué par un microprocesseur AMD 2900 de type RISC et est par conséquent identique aux microprocesseurs MPH₁ et MPD₁ décrits ci-dessus.

Le composant 7 est une mémoire tampon dont la capacité est comprise entre 512 et 768 kilooctets (identique à MTD₁ et MTH₁) alors que le composant 8 est une mémoire de type RAM, identique aux mémoires de même type décrites ci-dessus en relation avec la figure 3, à savoir RAH₁ et RAD₁. Le composant 8 est donc formé par une mémoire de type RAM contenant les instructions des différents modules micrologiciels que comporte le processeur central PR₁, et une mémoire de type RAM pour les données qui sont traitées par le microprocesseur 6.

Les cartes-mères CMP₁, CMC₁, CMD₁ sont des cartes-mères de type bi-Multibus II.

La carte-mère CMP₁ du processeur central PR₁ comporte également le composant matériel 9 qui est une interface avec la liaison L₁ qui relie le processeur central d'une part et DE₂ d'autre part à la mémoire à disques de sauvegarde MSD₁. L'interface 9 est donc de type IPI-2, normalisée.

De même, la carte-mère CMD₁ de l'unité à disques électroniques comporte le composant 29, interface avec la liaison L₂ reliant PR₂ et DE₁ à MSD₂.

La carte-fille CFD₁ de l'unité à disques électroniques DE₁ constitue le plan mémoire de cette unité et comporte par exemple, une pluralité de colonnes de mémoires RAM par exemple les colonnes 1R₁, ..., 1Rⱼ, ..., 1Rₙ.

Les informations (données et adresses où sont localisées ces données à l'intérieur des mémoires RAM du plan mémoire CMD₁) provenant de ou allant vers ce plan mémoire CFD₁ sont transportées par un bus BDA₁, qui se subdivise en un nombre suffisant de branches pour alimenter l'ensemble des colonnes de mémoires RAM de ce plan mémoire (dans le cas où l'unité à disques électroniques comprendrait un second plan mémoire, celui-ci serait constitué par une seconde carte-fille CFD₂ reliée à la première carte-fille CFD₁ par un bus de même type que BDA₁).

La carte-fille CFC₁ de la mémoire cache CA₁ est identique à la carte-fille CFD₁.

Cette carte-fille CFC₁ constitue le plan mémoire de la mémoire cache CA₁ et est formée d'une pluralité de colonnes parallèles de type RAM, à savoir 2R₁, ..., 2Rⱼ, ... 2Rₙ, l'ensemble de ces colonnes étant relié à la mémoire tampon 17 de la carte-mère CMC₁ par l'intermédaire du bus (données + adresses) BDA₂.

On peut donc constater que, d'une façon générale l'architecture matérielle du sous-système périphérique selon l'invention est construite autour de deux types de cartes-mères seulement, l'une pour les adaptateurs hôte et disque, l'autre pour les processeurs centraux, mémoires cache, et unités de disques électroniques. A chacun de ces deux types de cartes-mères sont associées une ou plusieurs cartes-filles de type différent selon la fonction assurée par chacun de ces éléments.

Il est clair que cette structure extrêmement simple, jointe au fait que l'ensemble des éléments connectés à l'un et/ou l'autre bus de type Multibus II sont disposés à l'intérieur d'un même panier porte-cartes, est extrêmement économique. Par ailleurs, en fabrication, son montage est extrêmement rapide.

On considère la figure 5.

L'architecture micrologicielle AML du sous-système périphérique selon l'invention comprend 5 grands sous-ensembles micrologiciels, à savoir les sous-ensembles P, H, D, C, S, respectivement implémentés sur les structures matérielles de PR₁, HA₁ (HA₂ à HA₄), DA₁ (DA₂ à DA₈), CA₁ (CA₂), DE₁ (DE₂).

Chaque sous-ensemble est composé d'un certain nombre de modules ayant chacun une fonction particulière. Certains modules sont identiques d'un sous-ensemble à l'autre.

Les modules d'un même sous-ensemble communiquent entre eux soit par l'intermédiaire de zones de mémoires communes disposées dans les mémoires de type RAM, telles que RAH₁, RAD₁, 8, 18, 28, ou par appel direct entre eux.

Les modules appartenant à des sous-ensembles différents communiquent entre eux par l'intermédiaire de messages Multibus II, ainsi qu'il est défini par les normes IEEE définissant le Multibus II, ces messages étant des messages sollicités pour les données et des messages non sollicités pour les requêtes, les réponses et les notifications.

En dehors des 5 sous-ensembles micrologiciels montrés à la figure 5, existe un autre sous-ensemble, commun à toutes les structures matérielles, et relatif aux microcontrôleurs contenus dans chacune de celles-ci, c'est-à-dire les microcontrôleurs MCH₁, MCD₁, 3, 4, 13, 14, 23, 24. Ce sous-ensemble micrologiciel est désigné par MIC. Il comprend les modules suivants :
- Le module m₁ chargé d'initialiser l'ensemble des composants matériels de chacun des éléments structurels HA₁ à HA₄, DA₁ a DA₈, PR₁, PR₂, CA₁, CA₂, DE₁, DE₂. Cette initialisation a trait plus particulièrement à différents tests de ces composants matériels lors de la mise sous tension des deux unités de contrôle UC₁ et UC₂. Ces tests sont plus connus dans la pratique courante sous leur sigle anglo-saxon, à savoir BIST et BOOT.
- Le module m₂ d'interconnexion, encore appelé, dans la terminologie anglo-saxonne, "interconnect space", qui est relatif à l'interconnexion des différentes structures matérielles, lors de la mise sous tension des deux unités de contrôle, et qui lui, est défini dans la norme IEEE 1296 précitée relative au Multibus II.
- Le module m₃ de gestion de la liaison filaire de type RS232 normalisée, liaison qui relie chacune des unités de contrôle aux deux alimentations ALIM₁ et ALIM₂ (liaisons non représentées pour simplifier les figures 1 à 3).

Le sous-ensemble H comprend les modules suivants :
- Le module M₀ concerne le système d'exploitation de l'adaptateur hôte (operating system, dans la terminologie anglo-saxonne). Ainsi qu'on le verra ci-dessous, ce module M₀ est commun aux sous-ensembles P, H, D, C, S. Ce module organise le travail de liaison entre les différents modules qui composent le sous-ensemble dont il fait partie, ici H, en assurant le passage de l'un à l'autre.
- Le module M₁ de gestion des transferts d'informations (données, adresses) commun aux sous ensembles P, H, D, C, S. Il assure le transfert des informations de l'élément matériel où il est implémenté, ici H, aux autres par l'intermédiaire de l'un ou l'autre des bus de type Multibus II (B₁, B₂).
- Le module M₂ de gestion de l'interface hôte IH₁ de l'adaptateur hôte HA₁. Il est clair que ce module est commun à tous les adaptateurs hôtes HA₁ à HA₈.
- Le module M₃ de gestion de la pile de commandes que contient la mémoire RAM instruction de la mémoire RAH₁. Il est commun aux autres sous-ensembles H, D, S.
- Le module M₄ d'exécution des commandes adressées aux unités de contrôle UC₁ et UC₂, par l'hôte H₁.
- Le module M₅ de réception des commandes provenant de l'hôte central H₁ destinée aux mémoires à disques de la batterie BMD₁, par exemple, et d'aiguillage de ces commandes vers l'adaptateur disque DA₁.
- Un module M₆ de reprise et de traitement d'erreurs lorsqu'une erreur est détectée dans l'un ou l'autre des composants matériels de l'adaptateur hôte. Ce module est commun aux sous-ensembles H, D et S.
- Le module M₇ de surveillance et d'administration qui effectue par exemple des statistiques, assure la liaison avec le module m₂ (voir plus haut), le sauvetage du contexte, par exemple en cas de coupure d'alimentation de l'unité de contrôle à laquelle appartient l'adaptateur hôte, l'initialisation de table, etc ... . Ce module est commun aux sous-ensembles H, D, S.
- Le module de gestion de la mémoire tampon hôte MTH₁, à savoir M₁₀.

Le sous-ensemble D implémenté dans l'adaptateur hôte DA₁ comprend les modules suivants :
- Le module M₀ défini plus haut,
- Le module M₁ de gestion des transferts Multibus II, défini également plus haut,
- Le module M₃ de gestion de la pile de commande défini plus haut,
- Le module de gestion du tampon mémoire MTD₁, à savoir M₁₀, (voir plus haut),
- Le module M₆ de reprise et de traitement d'erreurs, déjà défini plus haut,
- Le module M₇ de surveillance et d'administration, défini plus haut,
- Le module d'interprétation des commandes de l'hôte central envers l'une ou l'autre des mémoires à disques de la batterie BMD₁, à savoir M₉.

Le sous-ensemble micrologiciel S des unités à disques électroniques DE₁ et DE₂ est strictement identique au sous-ensemble micrologiciel D.

Le sous-ensemble micrologiciel C des mémoires cache CA₁, CA₂ comprend les modules suivants :
- Le module M₀ (voir plus haut),
- Le module de gestion des transferts d'information sur l'un ou l'autre des Multibus II, à savoir M₁ (voir plus haut),
- Le module de gestion des tables que comportent les mémoires cache CA₁, CA₂, à savoir M₁₁.

Le sous-ensemble micrologiciel P implémenté dans chacun des deux processeurs centraux PR₁ et PR₂ comprend les modules suivants :
- Le module M₀ relatif aux systèmes d'exploitation (operating system), (voir plus haut).
- Le module M₁ de gestion des transferts Multibus II, (voir plus haut).
- Le module d'initialisation de l'unité de contrôle correspondante, à savoir M₁₂ (unité de contrôle UC₁, UC₂).
- Le module M₁₃ de communication entre les deux unités de contrôle, chargé en particulier d'établir les échanges d'informations entre ces deux unités de contrôle, lorsque l'un des éléments structurels de l'une se trouve indisponible, l'élément structurel correspondant de l'autre étant alors chargé d'effectuer les opérations effectuées normalement par l'élément indisponible.
- Un module M₁₄ de gestion de l'alimentation ALIM₁, (ALIM₂), et d'un panneau de maintenance destiné à tout opérateur humain chargé de la maintenance du sous-système périphérique selon l'invention.
- Un module M₁₆ de sauvetage du contexte de l'ensemble de l'unité de contrôle correspondante, en cas de coupure de tension.
- Un module M₁₇ de reprise des opérations soit d'écriture soit de lecture dans l'unité à disques électroniques DE₁, DE₂, après qu'ait eu lieu une coupure de tension accompagnée du sauvetage de contexte correspondant par le module M₁₆ précité.
- Le module M₁₈ de gestion de l'interface entre la mémoire à disques de sauvegarde MSD₁ (MSD₂) et le processeur central qui lui est associé, à savoir PR₁.

La manière dont opère chacun des sous-ensembles micrologiciels définis ci-dessus, ainsi que la façon dont chacun des modules qui les compose agit en liaison avec les autres, sera mieux comprise au regard de la description qui suit, en liaison notamment avec les figures 7a, 7b, 8a, 8b relatives aux opérations de lecture et d'écriture à l'intérieur des batteries de mémoires à disques BMD₁ et des mémoires cache CA₁, CA₂.

On commence tout d'abord par définir les grandes lignes du rôle du sous-ensemble P du processeur central PR₁ (PR₂).

Les deux processeurs centraux PR₁ et PR₂ sont les maîtres d'oeuvre, respectivement, des différents éléments matériels appartenant à chacune des unités de contrôle UC₁ et UC₂. Ils chargent les programmes de mise en oeuvre des différents éléments HA₁ à HA₈, DA₁ à DA₈, DE₁, DE₂, CA₁, CA₂ à l'intérieur de ceux-ci afin qu'ils puissent remplir les fonctions qui leur sont dévolues. Ces programmes de mise en oeuvre correspondent, bien entendu, aux sous-ensembles fonctionnels, H, D, C, S décrits ci-dessus. Les processeurs PR₁ et PR₂ vont chercher ces programmes qui sont stockés, par exemple, dans les mémoires à disques rotatifs de sauvegarde MSD₁ et MSD₂. Dans ce cas, ces dernières ont donc une double fonction, à savoir, d'une part la sauvegarde des informations non encore stockées et en attente d'être écrites dans les mémoires à disques rotatifs des batteries BMD₁, BMD₂, etc, ...., en cas d'indisponibilité des adaptateurs DA₁, DA₂, etc ..., et d'autre part le stockage des programmes de mise en oeuvre précités. Cependant, ces derniers pourraient être stockés dans une mémoire à disques spéciale, dite mémoire à disques système reliée aussi bien au processeur PR₁ qu'au processeur PR₂. On supposera dans la suite du texte que les mémoires à disques rotatifs de sauvegarde MSD₁ et MSD₂ jouent également le rôle de mémoires à disques système.

L'initialisation du sous-système périphérique de mémoire de masse selon l'invention se déroule de la manière suivante :
chaque unité de contrôle UC₁ (UC₂) se charge et se configure de façon autonome à la mise sous tension. Le chargement (c'est-à-dire l'implémentation des différents sous-ensembles micrologiciels dans chacune des structures matérielles des éléments structurels constituant l'unité de contrôle) s'opère à partir d'un fichier de la mémoire à disques de sauvegarde (puisque celle-ci joue le rôle de mémoire à disques système). L'initialisation consiste à exécuter successivement les opérations suivantes :
Pour chacune des structures matérielles, le microcontrôleur (MCH₁, MCD₁, 3, 4, 13, 14, 23, 24) exécute les instructions du module m₁ et initialise les composants matériels de celles-ci.

Pendant ce temps, la structure matérielle de PR₁ se charge à partir de la mémoire à disques MSD₁, alors que les autres structures matérielles des autres éléments structurels attendent d'être chargées par leur propre sous-ensemble micrologiciel. Autrement dit, le processeur central PR₁ est chargé, dans sa mémoire RAM 8, par les modules M₀, M₁, M₁₂, M₁₃, M₁₄, M₁₅, M₁₆, et M₁₇.

Ensuite, le processeur PR₁ envoie un code de chargement à chacune des autres structures matérielles constituant l'unité de contrôle UC₁. Il leur envoie ensuite les sous-ensembles micrologiciels qui leur correspondent, (qu'il a été chercher dans la mémoire à disques de sauvegarde MSD₁ et qu'il a stocké par exemple dans sa mémoire tampon 7), par l'intermédiaire de l'un ou l'autre des deux bus de type Multibus II.

Chacun des éléments (DE₁, CA₁, HA₁, DA₁), initialise ses composants matériels en exécutant chacun des modules m₀, m₁, m₂, m₃ grâce aux microcontrôleurs qu'il comporte. Il se charge ensuite des différents modules constituant le sous-ensemble micrologiciel qu'il met en oeuvre.

Si, pour une raison quelconque, la mémoire à disques de sauvegarde dans sa fonction de mémoire à disques système n'est pas accessible par le processeur central PR₁, ce dernier est chargé par le processeur central PR₂ de l'autre unité de contrôle UC₂. Une fois chargé PR₁ va chercher le fichier de chargement des sous-ensembles micrologiciels des éléments structurels de l'unité de contrôle UC₁ dans l'autre mémoire à disques MSD₂ agissant en tant que mémoire a disques système de UC₂.

Dès que chacune des structures matérielles d'une unité de contrôle est chargée par l'ensemble des modules qui constituent le sous-ensemble micrologiciel qui lui correspond, l'élément structurel ainsi formé peut exécuter les fonctions qui lui sont dévolues.

Pour mieux illustrer la manière dont opère un sous-ensemble micrologiciel, on se réfère tout d'abord aux figures 7a et 7b qui montrent la manière dont les opérations de lecture d'informations à l'intérieur des mémoires à disques d'une batterie, par exemple, BMD₁, sont effectuées par chacun des modules micrologiciels constituant les sous-ensembles H, D et C qui sont chargés dans HA₁, DA₁ et CA₁.

On se réfère également à la figure 6 qui montre comment les modules des sous-ensembles logiciels implémentés dans HA₁ et DA₁ agissent les uns par rapport aux autres, et quelles sont les différentes opérations effectuées par chacun de ces modules lors de la lecture d'un bloc de données aussi bien dans l'une des mémoires à disques de la batterie BMD₁ (BMD₂ etc ...) que dans la mémoire cache CA₁ (CA₂).

Avant de décrire les différentes opérations qui s'enchaînent lors de la lecture d'un bloc de données dans l'une des mémoires à disques D₁ à D₆ de BMD₁ et dans la mémoire cache CA₁, il importe de rappeler comment sont écrites les informations dans une mémoire à disques et quel est le rôle d'une mémoire cache.

Pour écrire un bloc de données sur un disque magnétique d'une mémoire à disques, on découpe celui-ci en secteurs ayant tous la même longueur. Ceci est d'usage courant dans les mémoires à disques dites à format fixe. Les différents secteurs contiennent le même nombre d 'octets (par exemple 512). Dans tout secteur, on écrit successivement un préambule, un bloc de données, et un postambule. Le préambule contient des informations de localisation physique du secteur sur la piste du disque magnétique où il se trouve, le postambule des informations de vérification de l'intégrité des données pour vérifier si tous les octets enregistrés dans ce secteur sont corrects. Cette organisation d'écriture des informations par secteurs, et la répartition de celle-ci à l'intérieur des secteurs est parfaitement connue et utilisée couramment dans les mémoires à disques conventionnelles. Dans le sous-système périphérique selon l'invention, cette organisation d'écriture est également utilisée dans les unités à disques électroniques DE₁ et DE₂.

On s'aperçoit que, au cours des opérations relatives à une mémoire à disques, on effectue souvent la lecture d'un même bloc de données. En d'autres termes, la probabilité d'accès aux mêmes blocs de données au cours du temps est très élevée. Par ailleurs, en cas de lecture séquentielle de plusieurs blocs de données, la probabilité pour que, une fois lu un premier bloc de données déterminé, on lise toujours les mêmes blocs de données à la suite de ce même bloc déterminé, est également élevée.

En raison de ce qui vient d'être écrit ci-dessus, on utilise des mémoires cache qui contiennent précisément les données dont la probabilité d'être lues très souvent est élevée. Ces données seront donc lues directement dans la mémoire cache sans qu'il y ait besoin d'aller les chercher dans la mémoire à disques correspondante.

Elles seront donc lues avec le temps d'accès propre à la mémoire cache qui est très sensiblement inférieur au temps d'accès des mémoires à disques magnétiques (de l'ordre du dixième de milliseconde contre quelques dizaines de millisecondes).

A l'intérieur d'une mémoire cache CA₁, les informations sont écrites, dans les colonnes de mémoires RAM 2M₁, ...,2Mⱼ, ..., 2Mₙ de la carte-fille CFC₁ sous forme de blocs que l'on désignera sous le nom de blocs cache. Chacun de ceux-ci comprend, de la même façon que tout secteur d'une mémoire à disques, un préambule, suivi par des données dont on dit habituellement qu'il s'agit d'un champ de données, ce dernier étant lui-même suivi d'un postambule. Les rôles respectifs des préambule et postambule est identique à celui des préambule et postambule des secteurs de données enregistrées dans les mémoires à disques magnétiques.

Un champ de données d'un seul bloc cache correspond à l'ensemble des données enregistrées dans N (nombre entier) secteurs d'un disque magnétique d'une mémoire à disques appartenant à l'une des batteries BMD₁, BMD₂, etc ... .

La correspondance entre chaque bloc cache et les différents secteurs correspondants d'un disque magnétique donné appartenant à une mémoire à disques donnée est indiquée dans une table. Elle occupe par exemple des espaces mémoire de la mémoire RAM 18 appartenant à la carte-mère CMC₁.

On considère désormais les figures 7a et 7b qui montrent le dialogue entre l'adaptateur hôte HA₁ et l'adaptateur disque DA₁ d'une part, entre ce dernier et la mémoire cache d'autre part et enfin entre cette dernière et l'adaptateur hôte HA₁, lors de la lecture d'un bloc de données dans l'une quelconque des mémoires à disques de la batterie BMD₁, une partie de ces données étant ou non lues dans la mémoire cache CA₁.

Les opérations de lecture sont les suivantes :
1/ L'adaptateur hôte HA₁ reçoit une requête de lecture de la part de l'hôte H₁, par exemple, sous forme d'un message de commandes CMD qui est envoyé dans une pile de commandes située par exemple dans la mémoire RAH₁. Cette opération est effectuée successivement par les modules M₂ et M₃.
2/ A l'intérieur du message de commande CMD, le module M₅ décode l'adresse de la mémoire à disques dans laquelle doit être lu le bloc de données. Cette mémoire à disques est appelée pour simplifier ressource.
3/ Dès que le module M₅ a décodé l'adresse de la ressource, il constitue un message de commandes désigné par MSG CMD.
4/ Ce message MSG CMD, qui est en fait un message de type Multibus II est envoyé par l'intermédiaire du bus B₁ à l'adaptateur disque DA₁, sous la conduite du module M₁.
5/ Il est décodé par le microprocesseur MPD₁ sous la conduite du module M₉.
6/ Ce dernier en vérifie la validité.
7/ Le module M₉ effectue la réservation de la ressource où l'hôte H₁ désire lire le bloc de données en question. Une fois la ressource réservée, on passe à l'opération 100.
   - ***100*** :: sous la conduite du module M₁, l'adaptateur disque envoie une commande d'interrogation CI au processeur 16 de la mémoire cache CA₁. Cette commande a pour but de savoir si le bloc de données se trouve mémorisé dans les mémoires RAM de la carte-fille CFC₁.
   - ***101*** :: le module de gestion de la table de la mémoire cache, à savoir M₁₁, effectue dans la table de la mémoire cache une recherche pour savoir si le bloc de données en question s'y trouve.

A) On suppose tout d'abord que la réponse est positive.
   Un dialogue s'établit alors entre la mémoire cache CA₁ et l'adaptateur hôte HA₁. Ce dialogue comporte les opérations suivantes 102A à 111.
   - ***102A*** :: le module M₁ de la mémoire cache CA₁ envoie à l'adaptateur hôte une demande de réservation de pages de la mémoire tampon MTH₁.
   - ***103*** :: le module de gestion M₆ de l'adaptateur hôte alloue alors des pages de la mémoire tampon MTH₁ pour y mémoriser temporairement le bloc de données qui sera lu dans la mémoire cache CA₁. Dès que la page de mémoire tampon est allouée, on passe à l'opération 104.
   - ***104*** :: l'adaptateur hôte envoie, sous la conduite du module M₁ un message à la mémoire cache via le bus B₁, indiquant que des pages de sa mémoire tampon MTH₁ sont accordées.
   - ***105*** :: le bloc de données lu dans la mémoire cache est transféré, sous la conduite du module M₁ des mémoires cache et de l'adaptateur hôte dans la mémoire tampon MTH₁.
   - ***106*** :: dès que l'ensemble des données du bloc est mémorisé dans la mémoire tampon MTH₁, l'adaptateur hôte notifie à l'hôte H₁ qu'il va transférer à ce dernier, le bloc de données en question. Cette notification est effectuée sous la conduite du module M₂.
   - ***107*** :: dès que l'hôte H₁ a accepté le transfert, ce dernier est effectué par l'adaptateur hôte, sous la conduite du module M₂.
   - ***108*** :: pendant qu'ont lieu les opérations 106 et 107, la mémoire cache envoie un signal HIT à l'adaptateur disque DA₁ indiquant à ce dernier que le bloc de données en question a été transféré de la mémoire cache à l'adaptateur hôte HA₁. Ce message HIT est acheminé de la mémoire cache CA₁ à l'adaptateur disque DA₁ par le module M₁ de la mémoire cache.
   - ***109*** :: dès que l'adaptateur disque a reçu le message HIT, il constitue un message de réponse MSG REP, sous la conduite du module M₉.
   - ***110*** :: l'adaptateur disque envoie alors le message de réponse MSG REP à l'adaptateur hôte HA₁, sous la conduite du module M₁ des adaptateur disque et adaptateur hôte.
   - ***111*** :: dès que l'adaptateur hôte a reçu le message de réponse MSG REP, il envoie, sous la conduite de son module M₂, un signal dit émission de terminaison indiquant à l'hôte H₁ que l'opération de lecture du bloc de données dans le cache CA₁ est terminée.
B) La réponse est négative.
   On procède suite à l'opération 101 (voir plus haut), à l'opération 102B.
   - ***102B*** :: la mémoire cache CA₁, par l'intermédiaire de son module M₁, envoie à l'adaptateur disque DA₁ un message, via le bus B₁, indiquant que le bloc de données ne s'y trouve pas. A la suite de la réception de ce message par DA₁, on passe à l'opération suivante 8.

   8/ L'adaptateur DA₁ alloue une ou plusieurs pages de sa mémoire tampon MTD₁ pour y recevoir le bloc de données qui sera lu dans la ressource (opération effectuée par le module M₁₀). On passe à l'opération suivante.
   9/ Sous la conduite du module M₈, s'effectue la lecture du bloc de données dans la ressource.
   10/ Dès que la lecture est terminée, le bloc de données étant momentanément mémorisé dans les pages allouées de la mémoire tampon MTD₁, l'adaptateur DA₁ envoie à HA₁, sous la conduite du module M₁ une demande d'allocation de pages de sa mémoire tampon MTH₁.
   11/ En réponse à cette demande, HA₁ alloue des pages de sa mémoire tampon MTH₁ en vue de réceptionner le bloc de données en question.
   12/ HA₁ envoie à DA₁ un message, via le bus B₁, signifiant que une ou plusieurs pages de MTH₁ sont accordées (module M₁ de HA₁ et DA₁).
   13/ DA₁ organise alors, en réponse à ce dernier message, le transfert des informations lues dans la ressource vers HA₁, sous la conduite des modules M₁ de ces deux adaptateurs.
   14/A : L'adaptateur hôte, sous la conduite du module M₂, notifie alors à l'hôte H₁, le transfert immédiat du bloc de données qui a été lu dans la ressource et qui est temporairement stocké dans la mémoire tampon MTH₁.
   14/B : Pendant que se déroule l'opération 14/A, l'adaptateur disque constitue un message réponse MSG REP. Celui-ci est envoyé (opération 15/B), sous la conduite des modules M₁ des adaptateur disque et des adaptateur hôte, à HA₁. Dès réception de ce message réponse, ce dernier effectue l'opération 15/A.
   15/A : Il transfère alors le bloc de données vers l'hôte H₁, sous la conduite du module M₂. Pendant ce temps, DA₁ effectue les opérations 15/B et 16/B
   15/B : L'adaptateur disque, par l'intermédiaire du module M₈, libère la ressource puis, sous la conduite du module M₁₀, la mémoire tampon MTD₁ (opération 16/B).
   16/A : Dès que l'adaptateur hôte a terminé le transfert des données vers l'hôte H₁, il émet vers celui-ci un signal d'émission de terminaison, indiquant que l'ensemble des opérations de lecture du bloc des données dans la ressource, est terminé (module M₂).
   17/A : L'adaptateur hôte libère MTH₁ alors sous la conduite de son module M₁₀.

   On se reporte désormais aux figures 8A et 8B qui montrent l'ensemble des opérations effectuées pour écrire un bloc de données, soit dans la mémoire cache CA₁, soit dans l'une des mémoires à disques d'une batterie telle que BMD₁, BMD₂, etc ... L'ensemble des opérations 1 à 8, qui concerne le dialogue entre HA₁ et DA₁, est strictement identique à l'ensemble des opérations 1 à 8 qui a déjà été décrit, en relation avec les figures 7A et 7B pour la lecture d'un bloc de données dans une ressource ou dans la mémoire cache CA₁. On passe donc à l'opération suivante 20 :
   20/ L'adaptateur disque DA₁ envoie un message, via le bus B₁, à l'adaptateur hôte HA₁, pour lui demander le transfert du bloc de données à écrire. Cette opération a lieu sous la conduite des deux modules M₁ des deux adaptateurs.
   21/ L'adaptateur hôte alloue alors une ou plusieurs pages de la mémoire tampon hôte MTH₁, en vue d'y recevoir le bloc de données (module M₁₀).
   22/ HA₁ notifie alors à l'hôte central H₁ que celui-ci doit transférer le bloc de données à écrire (module M₂).
   23/ L'hôte central transfère alors le bloc de données à écrire sous la conduite du module M₂, ce dernier étant alors mémorisé temporairement dans les pages du tampon hôte allouées lors de l'opération 21.
   24/ HA₁ envoie alors à DA₁ un message demandant à celui-ci d'allouer une ou plusieurs pages de son tampon mémoire MTD₁, en vue d'y recevoir ultérieurement le bloc de données à écrire (modules M₁ des deux adaptateurs).
   25/ En réponse à ce message, DA₁ envoie un message indiquant à HA₁ que une ou plusieurs pages de MTD₁ sont accordées (modules M₁).
   26/ HA₁ transfère alors le bloc de données à écrire, vers DA₁ qui mémorise temporairement celle-ci dans les pages de MTD₁ allouées précédemment.
   27/ Dès réception du bloc de données à écrire dans MTD₁, DA₁ constitue un message de réponse MSG REP, (module M₉). Il l'envoie sous la conduite des modules M₁ à HA₁ (opération 28).
   29/ Lorsque HA₁ reçoit le message MSG REP, il envoie vers l'hôte un signal d'émission de terminaison, sous la conduite du module M₂. Pour l'hôte H₁, ce message signifie que l'opération d'écriture du bloc de données est terminée, alors qu'en réalité elle n'a pas encore eu lieu, tant dans la ressource réservée que dans la mémoire cache CA₁.

On passe ensuite à l'opération 30.
30/ Sous la conduite du module M₈, l'adaptateur DA₁ organise l'écriture du bloc de données dans la ressource considérée. Parallèlement à cette écriture, l'adaptateur disque envoie, sous la conduite de son module M₁, un signal de commandes CIW, via l'un ou l'autre des deux bus B₁, B₂, à la mémoire cache CA₁. Ce signal a pour objet de demander à cette dernière si le bloc de données à écrire peut être écrit dans la mémoire CFC₁ de celle-ci. L'envoi du signal de commandes CIW fait l'objet de l'opération 128.
   - ***129*** :: En réponse à 128, la mémoire cache, sous la conduite du module M₁₁ envoie alors à l'adaptateur disque un signal HIT ou H̅I̅T̅ signifiant dans le premier cas que le bloc de données est à écrire dans la mémoire cache, et dans le second, qu'il ne l'est pas (opération 130A dans le premier cas, 130B dans le second). Il est évident que dans le second cas, en réponse à l'opération 130B,l'adaptateur disque ignore désormais la mémoire cache CA₁. Dans le premier cas (130A), on passe à l'opération 131.
   - ***131*** :: L'adaptateur disque envoie à la mémoire cache un message demandant la réservation d'une ou plusieurs pages de la mémoire tampon cache, à savoir 17, en vue d'y stocker temporairement le bloc de données à écrire, avant son inscription dans la mémoire CFC₁. Cette opération a lieu sous la conduite des modules M₁ de DA₁ et CA₁.
   - ***132*** :: Sous la conduite du module M₁ de CA₁, cette dernière signifie à DA₁, que une ou plusieurs pages du tampon 17 sont allouées en vue d'y mémoriser temporairement le bloc de données à écrire.
   - ***133*** :: En réponse à 132, DA₁ transfère le bloc de données à écrire dans la mémoire tampon 17 de CA₁.
   - ***134*** :: Dès que le bloc de données a été transféré dans 17, il est ensuite transféré, sous la conduite de M₁₁, dans la mémoire CFC₁.

L'ensemble des opérations 128A à 134 s'effectue en parallèle avec l'opération 30 (voir plus haut).

Après cette opération 30, on passe à l'opération 31.
31/ Le module M₈ libère la ressource, une fois que l'ensemble des données du bloc à écrire y est inscrite.
32/ Une fois la ressource libérée, le module M₁₀ libère les pages de la mémoire tampon MTD₁ qui avaient été allouées.
33/ L'opération 32 étant terminée, DA₁, sous la conduite du module M₁ envoie un message à l'adaptateur hôte afin que ce dernier libère sa mémoire tampon hôte MTH₁, ce qu'il effectue par l'opération 34.

Si l'adaptateur hôte HA₁ se trouve indisponible, il est remplacé par l'adaptateur correspondant de UC₂, à savoir HA₂. De même, alors DA₂ remplace DA₁. Le dialogue s'établit alors entre HA₂, DA₂ et CA₁, via B₂.

Si l'unité UC₁ est indisponible dans son ensemble, les données contenues dans CA₁, également inscrite dans CA₂, sont directement lues dans dans cette dernière, le dialogue ayant donc lieu entre HA₂, DA₂ et CA₂. On voit, là encore, tout l'avantage que procure le double accès aux mémoires cache CA et CA₂, et la redondance des informations inscrites aussi bien dans CA₁ et CA₂.

On constate, à l'examen des figures 6, 7, 8, qu'un certain nombre de modules effectue, que ce soit dans les adaptateurs hôte, disque, ou dans la mémoire cache, un grand nombre d'opérations, identiques d'un élément matériel à l'autre. Il en est ainsi par exemple des modules M₂ et M₁₀. On notera également l'importance des modules M₂, M₉ et M₈.

Il convient de noter que l'ensemble des opérations de lecture et d'écriture d'un bloc de données déterminé est effectué de la même manière s'agissant des deux unités à disques électroniques DE₁ et DE₂. Le bloc des données à écrire est divisé, de la même façon que dans les mémoires à disques rotatifs en secteurs contenant le même nombre d'octets, l'ensemble des informations d'un secteur étant inscrit dans des emplacements mémoire dont les adresses se suivent, par exemple d'une unité. Dans une forme de réalisation préférée de l'invention, les données sont écrites sous un format de 39 bits soit 32 bits utiles répartis en quatre octets ajoutés à sept bits de correction d'erreur dits ECC (error corrector code), ce mode de correction d'erreur étant conventionnellement utilisé dans les mémoires RAM dynamiques. Pour utiliser aussi bien le procédé de lecture que le procédé d'écriture. tel que décrit aux figures 7 et 8, dans un disque électronique tel que DE₁ ou DE₂, il suffit de remplacer dans toutes les explications qui ont été données plus haut, l'adaptateur disque DA₁ par la carte mère CMD₁, le microprocesseur 26 jouant le même rôle que le microprocesseur MPD₁, la mémoire tampon 27 jouant le même rôle que le tampon mémoire MTD₁ de l'adaptateur disque. Une fois que les données sont écrites dans la mémoire CFD₁, il y a mise à jour, en temps masqué, de la mémoire à disques de sauvegarde MSD₁, celle-ci recevant le même bloc de données que celui qui a été écrit dans la mémoire CFD₁, ces données provenant du tampon hôte MTH₁.

## Revendications

1. Sous-système périphérique de mémoire de masse (PSS₁ ,PSS₂) appartenant à un système de traitement de l'information comprenant au moins un hôte central (H₁,H₂,H₃,H₄), comprenant au moins deux unités de commande redondantes (UC₁, UC₂) d'une pluralité de mémoires de masse de différents types (BMD₁, BMD₂, ...) incluant des batteries de mémoires à disques, des disques électroniques semiconducteurs et des mémoires cache, ayant chacune des moyens de mémorisation des données envoyées par l'hôte, les unités de commande comportant :
- deux bus de type parallèle (B₁,B₂),
- et une pluralité d'éléments structurels incluant :
- au moins un adaptateur hôte (HA₁, HA₂, HA₃, HA₄),connecté à au moins l'hôte central et à au moins l'un des deux bus
- un processeur central connecté aux deux bus,
- au moins un adaptateur de mémoire de masse (DA₁, DA₂, CMC₁,CMD₁...) dont chacun est associé à l'une des mémoires de masse et est connecté à au moins l'un des deux bus et à un banc de mémoires de masse associé, chacun des adaptateurs de mémoire de masse étant accessible par chacune des unités de commande,
- au moins un disque électronique connecté aux deux bus,
- au moins une mémoire cache connectée aux deux bus,
- une alimentation électrique indépendante (ALIM₁, ALIM₂, BAT₁, BAT₂),
où chacun des éléments structurels comprend une structure matérielle associée à un sous-ensemble logiciel (H,D,P,C,S), laquelle comprend une première partie incluant au moins une interface de connexion elle-même connectée à au moins l'un des deux bus et à des moyens correspondants de traitement et de commande de l'élément, et une seconde partie spécifique de chacun des éléments structurels, la première partie du dit élément structurel étant identique à toutes les premières parties des dits éléments structurels,
le sous ensemble logiciel étant spécifique de chaque élément structurel, et traité par les dits moyens de traitement et de commande,
chaque sous ensemble étant composé d'une pluralité de modules (M₀,M₁,.., M₁₈), chacun des modules ayant une fonction particulière, une partie au moins des modules étant identique d'un sous-ensemble logiciel à l'autre.

2. Sous-système selon la revendication 1 caractérisé en ce que l'adaptateur hôte et l'adaptateur mémoire de masse comprennent chacun une carte-mère (CMH₁, CMD₁) associée à une carte-fille (CFH₁-CFD₁), les cartes-mères identiques matériellement entre elles comprenant les composants suivants :
- une mémoire tampon (MTH₁, MTD₁) recevant les blocs de données devant être écrits ou lus dans la mémoire de masse,
- un microprocesseur de contrôle de fonctionnement de l'adaptateur auquel il appartient (MPH₁, MPD₁),
- une mémoire de type RAM (RAH₁, RAD₁) recevant les différentes instructions des modules micrologiciels du sous-ensemble fonctionnel spécifique de l'adaptateur correspondant d'une part, et d'autre part, des données,
- un microprocesseur (MCH₁, MCD₁) d'interconnexion de l'adaptateur correspondant avec les autres éléments structurels des unités de contrôle,
- une interface de connexion avec au moins l'un des deux bus, ces composants étant reliés au bus interne du microprocesseur de contrôle (BI₁, BI₂).

3. Sous-système selon la revendication 2, caractérisé en ce que la carte-fille (CFH₁) de l'adaptateur hôte comprend une interface de connexion (IH₁) avec l'hôte central et en ce que la carte-fille de l'adaptateur mémoire de masse (CFD₁) comprend une interface de liaison (ID₁) avec la mémoire de masse (BMD₁).

4. Sous-système selon la revendication 1, caractérisé en ce que le processeur central (PR₁ - PR₂), I'unité à disques électroniques (DE₁, DE₂) et la mémoire-cache comprennent chacun au moins une carte-mère reliée ou non à une carte-fille, les cartes-mères identiques matériellement entre elles comprenant les composants matériels suivants :
- deux interfaces de communication (1-2, 11-12, 21-22) avec les deux bus (B₁, B₂),
- deux microcontrôleurs d'interconnexion (3-4, 13-14, 23-24) avec les autres éléments structurels constitutifs du sous-système par l'intermédiaire des deux bus B₁ et B₂,
- un microprocesseur (6, 16, 26) de commande de l'élément structurel correspondant,
- une mémoire tampon (7, 17, 27),
- une mémoire de type RAM (8, 18, 28) contenant les différents modules micrologiciels du sous-ensemble spécifique de l'élément structurel correspondant et les données traitées par son microprocesseur de commande,
ces différents composants étant reliés au même bus interne de ce même microprocesseur de commande (5, 15, 25).

5. Sous-système selon la revendication 3 caractérisé en ce que le sous-ensemble fonctionnel H spécifique de l'adaptateur hôte (HA₁) comprend les différents modules suivants :
- le module M₀ concernant le système d'exploitation de l'adaptateur hôte (HA₁) organisant le travail de liaison entre les différents modules composant le sous-ensemble H,
- le module M₁ de gestion des transferts des informations selon l'adaptateur hôte et les autres éléments structurels par l'intermédiaire du bus, de type parallèle auquel l'adaptateur est relié (B₁, B₂),
- le module M₂ de gestion de l'interface hôte (IH₁),
- le module M₃ de gestion de la pile de commandes contenue dans la mémoire de type RAM (RAH₁) de l'adaptateur hôte (HA₁),
- le module M₄ d'exécution des commandes adressées aux unités de contrôle UC₁ et UC₂ par l'hôte H₁,
- le module M₅ de réception des commandes provenant de l'hôte central (H₁) destinée à la mémoire de masse (BMD₁) et d'aiguillage de ces commandes vers l'adaptateur mémoire de masse (DA₁),
- le module M₆ de reprise et de traitement d'erreurs lorsqu'une erreur est détectée dans l'un ou l'autre des composants matériels de l'adaptateur hôte (HA₁),
- le module de gestion de la mémoire tampon (MTH₁) de l'adaptateur hôte (HA₁).

6. Sous-système selon la revendication 5 caractérisé en ce que le sous-ensemble fonctionnel D spécifique de l'adaptateur mémoire de masse (DA₁) comprend les différents modules :
- M₀, M₁, M₃, M₆, M₁₀ identiques à ceux de l'adaptateur hôte, et
- le module M₉ d'interprétation des commandes de l'hôte central envers la mémoire de masse (BMD₁).

7. Sous-système suivant la revendication 5, caractérisé en ce que le sous-ensemble des unités à disques électroniques comprend les modules :
- M₀, M₁, M₃, M₆, M₁₀ identiques à ceux de l'adaptateur hôte (HA₁) et,
- le module M₉ d'interprétation des commandes de l'hôte central envers l'unité à disques électroniques correspondante.

8. Sous-système suivant la revendication 5 caractérisé en ce que le sous-ensemble C des mémoire-caches (CA₁, CA₂) comprend les modules M₀, M₁ et le module M₁₁ de gestion des tables des mémoire-caches (CA₁, CA₂).

9. Sous-système suivant la revendication 5 caractérisé en ce que le sous-ensemble fonctionnel P des processeurs centraux (PR₁, PR₂) comprend, outre les modules M₀ et M₁ :
- le module M₁₂ d'initialisation des unités de contrôle correspondantes (UC₁, UC₂),
- le module M₁₃ de communication entre les deux unités de contrôle chargé en particulier d'établir les échanges d'informations entre des unités lorsque l'un des éléments structurels composant l'une d'elles est indisponible,
- le module M₁₄ de gestion de l'alimentation (ALIM₁, ALIM₂) de l'unité de contrôle commandée par le processeur central correspondant,
- le module M₁₆ de sauvetage du contexte de l'unité de contrôle commandée par le processeur central correspondant, en cas de coupure de tension d'alimentation,
- le module M₁₇ de reprise des opérations soit d'écriture soit de lecture dans l'unité à disques électroniques correspondante après qu'ait eu lieu une coupure de tension accompagnée du sauvetage du contexte mis en oeuvre par le module M₁₆.
- le module M₁₈ de gestion de l'interface entre la mémoire à disques de sauvegarde (MSD₁) et le processeur central associé (PR₁).

## Patentansprüche

1. Peripheres Massenspeicher-Untersystem (PSS₁, PSS₂), das zu einem Informationsverarbeitungssystem gehört, das wenigstens einen zentralen Verarbeitungsrechner (H₁, H₂, H₃, H₄) enthält, der wenigstens zwei redundante Steuereinheiten (UC₁, UC₂) für mehrere Massenspeicher verschiedener Typen (BMD₁, BMD₂, ...) enthält, die Batterien von Plattenspeichern, elektronische Halbleiterplatten und Cache-Speicher umfassen, die jeweils Mittel zum Speichern von vom Verarbeitungsrechner geschickten Daten besitzen, wobei die Steuereinheiten enthalten:
- zwei Busse des parallelen Typs (B₁, B₂),
- und mehrerer Strukturelemente, die enthalten:
- wenigstens eine Verarbeitungsrechner-Anschlußeinrichtung (HA₁, HA₂, HA₃, HA₄), die wenigstens an den zentralen Verarbeitungsrechner und an wenigstens einen der beiden Busse angeschlossen ist,
- einen Zentralprozessor, der an die beiden Busse angeschlossen ist,
- wenigstens eine Massenspeicher-Anschlußeinrichtung (DA₁, DA₂, CMC₁, CMD₁ ...), wovon jede einem der Massenspeicher zugeordnet ist und an wenigstens einen der beiden Busse sowie an eine zugehörige Massenspeicherbank angeschlossen ist, wobei auf jede Massenspeicher-Anschlußeinrichtung von jeder der Steuereinheiten zugegriffen werden kann,
- wenigstens eine elektronische Platte, die an die beiden Busse angeschlossen ist,
- wenigstens einen Cache-Speicher, der an die beiden Busse angeschlossen ist,
- eine unabhängige Stromversorgung (ALIM₁, ALIM₂, BAT₁, BAT₂),
wobei jedes der Strukturelemente eine Hardware-Struktur umfaßt, der eine Software-Untereinheit (H, D, P, C, S) zugeordnet ist und die einen ersten Teil, der wenigstens eine Anschlußschnittstelle aufweist, die ihrerseits an wenigstens einen der beiden Busse und an entsprechende Verarbeitungs- und Steuermittel des Elements angeschlossen ist, sowie einen, für das jeweilige Strukturelement spezifischen zweiten Teil enthält, wobei der erste Teil des Strukturelements mit sämtlichen ersten Teilen der Strukturelemente völlig übereinstimmt,
wobei die Software-Untereinheit für jedes Strukturelement spezifisch ist und von den Verarbeitungs- und Steuermitteln verarbeitet wird,
wobei jede Untereinheit aus mehreren Modulen (M₀, M₁, ... , M₁₈) aufgebaut ist, wovon jeder eine besondere Funktion besitzt, wobei wenigstens ein Teil der Module von einer Software-Untereinheit zur nächsten völlig gleich ist.

2. Untersystem nach Anspruch 1, dadurch gekennzeichnet, daß die Verarbeitungsrechner-Anschlußeinrichtung und die Massenspeicher-Anschlußeinrichtung jeweils eine Mutterkarte (CMH₁, CMD₁) enthalten, der eine Tochterkarte (CFH₁-CFD₁) zugeordnet ist, wobei die hinsichtlich der Hardware völlig gleichen Mutterkarten die folgenden Komponenten enthalten:
- einen Pufferspeicher (MTH₁, MTD₁), der die Datenblöcke empfängt, bevor sie in den Massenspeicher geschrieben oder aus diesem gelesen werden,
- einen Mikroprozessor für die Steuerung der Funktion der Anschlußeinrichtung, der er zugehört (MPH₁, MPD₁),
- einen Speicher des RAM-Typs (RAH₁, RAD₁), der einerseits die verschiedenen Befehle der Mikrocomputersoftware-Module der für die entsprechenden Anschlußeinrichtung spezifischen funktionalen Untereinheit und andererseits Daten empfängt,
- einen Mikroprozessor (MCH₁, MCD₁) für die Verbindung der entsprechenden Anschlußeinrichtung mit den anderen Strukturelementen der Steuereinheiten,
- eine Anschlußschnittstelle mit wenigstens einem der beiden Busse, wobei diese Komponenten mit dem internen Bus des Steuermikroprozessors (BI₁, BI₂) verbunden sind.

3. Untersystem nach Anspruch 1, dadurch gekennzeichnet, daß die Tochterkarte (CFH₁) der Verarbeitungsrechner-Anschlußeinrichtung eine Anschlußschnittstelle (IH₁) mit dem zentralen Verarbeitungsrechner enthält und daß die Tochterkarte der Mas-Senspeicher-Anschlußeinrichtung (CFD₁) eine Verbindungsschnittstelle (ID₁) mit dem Massenspeicher (BMD₁) enthält.

4. Untersystem nach Anspruch 1, dadurch gekennzeichnet, daß der Zentralprozessor (PR₁ - PR₂), die elektronische Platteneinheit (DE₁, DE₂) und der Cache-Speicher jeweils wenigstens eine Mutterkarte enthalten, die mit einer Tochterkarte verbunden ist oder nicht, wobei die hinsichtlich der Hardware untereinander völlig gleichen Mutterkarten die folgenden Hardware-Komponenten enthalten:
- zwei Kommunikationsschnittstellen (1-2, 11-12, 21-22) mit den beiden Bussen (B₁, B₂),
- zwei Mikrosteuereinrichtungen für die Verbindung (3-4, 13-14, 23-24) mit den anderen das Untersystem bildenden Strukturelementen über die zwei Busse B₁ und B₂,
- einen Mikroprozessor (6, 16, 26) für die Steuerung des entsprechenden Strukturelements,
- einen Pufferspeicher (7, 17, 27),
- einen Speicher des RAM-Typs (8, 18, 28), der die verschiedenen Mikrocomputersoftware-Module der für die entsprechenden Strukturelement spezifischen Untereinheit sowie die von dessen Steuermikroprozessor verarbeiteten Daten enthält,
wobei diese verschiedenen Komponenten mit demselben internen Bus dieses Steuermikroprozessors (5, 15, 25) verbunden sind.

5. Untersystem nach Anspruch 3, dadurch gekennzeichnet, daß die der Verarbeitungsrechner-Anschlußeinrichtung (HA1) eigentümliche funktionale Untereinheit H die folgenden verschiedenen Module enthält:
- den Modul M₀, der das Betriebssystem der Verarbeitungsrechner-Anschlußeinrichtung (HA₁) betrifft, das die Verbindungsarbeit zwischen den verschiedenen die Untereinheit A aufbauenden Modulen organisiert,
- den Modul M₁ des für die Verwaltung der Informationsübertragungen gemäß der Verarbeitungsrechner-Anschlußeinrichtung und den anderen Strukturelementen über den Bus des parallelen Typs, mit dem die Anschlußeinrichtung verbunden ist (B₁, B₂),
- den Modul M₂ für die Verwaltung der Verarbeitungsrechner-Schnittstelle (IH₁),
- den Modul M₃ für die Verwaltung des Befehls-Speicherblocks, der in dem Speicher des RAM-Typs (RAH₁) der Verarbeitungsrechner-Anschlußeinrichtung (HA₁) enthalten ist,
- den Modul M₄ für die Abarbeitung der vom Verarbeitungsrechner H₁ an die Steuereinheiten UC₁ und UC₂ adressierten Befehle,
- den Modul M₅ für den Empfang der vom zentralen Verarbeitungsrechner (H₁) ausgehenden und für den Massenspeicher (BMD₁) bestimmten Befehle und für die Leitung dieser Befehle zur Massenspeicher-Anschlußeinrichtung (DA₁),
- den Modul M₆ für die Wiederholung und für die Fehlerverarbeitung, wenn in der einen oder der anderen der Hardware-Komponenten der Verarbeitungsrechner-Anschlußeinrichtung (HA₁) ein Fehler erfaßt worden ist,
- den Modul zum Steuern des Pufferspeichers (MTH₁) der Verarbeitungsrechner-Anschlußeinrichtung (HA₁).

6. Untersystem nach Anspruch 5, dadurch gekennzeichnet, daß die für die Massenspeicher-Anschlußeinrichtung (DA₁) spezifische funktionale Untereinheit D die folgenden verschiedenen Module enthält:
- M₀, M₁, M₃, M₆, M₁₀, die denjenigen der Verarbeitungsrechner-Anschlußeinrichtung völlig gleich sind, und
- den Modul M₉ für die Interpretation der Befehle des zentralen Verarbeitungsrechners für den Massenspeicher (BMD₁).

7. Untersystem nach Anspruch 5, dadurch gekennzeichnet, daß die Untereinheit der elektronischen Platteneinheiten die folgenden Module enthält:
- M₀, M₁, M₃, M₆, N₁₀, die denjenigen der Verarbeitungsrechner-Anschlußeinrichtung (HA₁) völlig gleich sind, und
- den Modul M₉ für die Interpretation der Befehle des zentralen Verarbeitungsrechners für die entsprechende elektronische Platteneinheit.

8. Untersystem nach Anspruch 5, dadurch gekennzeichnet, daß die Untereinheit C der Cache-Speicher (CA₁, CA₂) die Module M₀, M₁ und den Modul M₁₁ für die Verwaltung der Tabellen der Cache-Speicher (CA₁, CA₂) enthält.

9. Untersystem nach Anspruch 5, dadurch gekennzeichnet, daß die funktionale Untereinheit P der Zentralprozessoren (PR₁, PR₂) außer den Modulen M₀ und M₁ enthält:
- den Modul M₁₂ für die Initialisierung der entsprechenden Steuereinheiten (UC₁, UC₂),
- den Modul M₁₃ für die Kommunikation zwischen den beiden Steuereinheiten, die insbesondere mit der Herstellung des Informationsaustausches zwischen den Einheiten beschäftigt sind, wenn eines der eine von ihnen aufbauenden Strukturelemente nicht zur Verfügung steht,
- den Modul M₁₄ für die Verwaltung der Stromversorgung (ALIM₁, ALIM₂) der vom entsprechenden Zentralprozessor gesteuerten Steuereinheit,
- den Modul M₁₆ für die Rettung des Kontexts der vom entsprechenden Zentralprozessor gesteuerten Steuereinheit bei einer Unterbrechung der Versorgungsspannung,
- den Modul M₁₇ für die Wiederholung entweder der Schreib- oder der Leseoperationen in bzw. aus der entsprechenden elektronischen Platteneinheit, nachdem eine Spannungsunterbrechung stattgefunden hat, die von der durch den Modul M₁₆ ausgeführten Rettung des Kontexts begleitet wird,
- den Modul M₁₈ für die Verwaltung der Schnittstelle zwischen dem Sicherungs-Plattenspeicher (MSD₁) und dem zugehörigen Zentralprozessor (PR₁).

## Claims

1. Peripheral mass memory sub-system (PSS₁, PSS₂) belonging to an information processing system comprising at least one central host (H₁, H₂, H₃ H₄), comprising at least two redundant control units (UC₁, UC₂) for a plurality of mass memories of different types (BMD₁, BMD₂, ...) including batteries of disk memories, electronic semiconductor disks and cache memories, each having means of storing data sent by the host, the control units comprising:
- two parallel-type buses (B₁, B₂),
- and a plurality of structural elements including:
- at least one host adapter (HA₁, HA₂, HA₃, HA₄), connected to at least the central host and to at least one of the two buses,
- a central processor connected to the two buses,
- at least one mass memory adapter (DA₁, DA₂, CMC₁, CMD₁, ...), each of which is associated with one of the mass memories and is connected to at least one of the two buses and to an associated bank of mass memories, each of the mass memory adapters being accessible by each of the control units,
- at least one electronic disk connected to the two buses,
- at least one cache memory connected to the two buses,
- an independent electricity supply (ALIM₁, ALIM₂, BAT₁, BAT₂),
in which each of the structural elements comprises a hardware structure associated with a software sub-assembly (H, D, P, C, S), which comprises a first portion including at least one connection interface which is itself connected to at least one of the two buses and to corresponding processing and control means of the element, and a second portion specific to each of the structural elements, the first portion of said structural element being identical to all the first portions of said structural elements,
the software sub-assembly being specific to each structural element, and processed by said processing and control means,
each sub-assembly being composed of a plurality of modules (M₀, M₁, ..., M₁₈), each module having a specific function, at least part of the modules being identical from one software sub-assembly to the next.

2. Sub-system according to Claim 1, characterised in that the host adapter and the mass memory adapter each comprise a motherboard (CMH₁, CMD₁) associated with a daughterboard (CFH₁, CFD₁), the motherboards, which are identical to one another in terms of hardware, comprising the following components:
- a buffer memory (MTH₁, MTD₁) receiving the blocks of data to be written to or read from the mass memory,
- a microprocessor for controlling the functioning of the adapter to which it belongs (MPH₁, MPD₁),
- a RAM-type memory (RAH₁, RAD₁) receiving, on the one hand, the various instructions from the micro-software modules of the functional sub-assembly specific to the corresponding adapter and, on the other hand, the data,
- a microprocessor (MCH₁, MCD₁) for interconnecting the corresponding adapter with the other structural elements of the control units,
- an interface for connection to at least one the two buses, these components being linked to the internal bus of the control microprocessor (BI₁, BI₂).

3. Sub-system according to Claim 2, characterised in that the daughterboard (CPH₁) of the host adapter comprises an interface (IH₁) for connection to the central host and in that the daughterboard of the mass memory adapter (CFD₁) comprises an interface (ID₁) for linking to the mass memory (BMD₁).

4. Sub-system according to Claim 1, characterised in that the central processor (PR₁ - PR₂), the electronic disk unit (DE₁, DE₂) and the cache memory each comprise at least one motherboard which may or may not be linked to a daughterboard, the motherboards, which are identical to one another in terms of hardware, comprising the following hardware components:
- two interfaces (1-2, 11-12, 21-22) for communication with the two buses (B₁, B₂),
- two micro-controllers (3-4, 13-14, 23-24) for interconnection with the other structural elements making up the sub-system via the two buses B₁ and B₂,
- a microprocessor (6, 16, 26) for controlling the corresponding structural element,
- a buffer memory (7, 17, 27),
- a RAM-type memory (8, 18, 28) containing the various micro-software modules of the sub-assembly specific to the corresponding structural element, and the data processed by its control microprocessor, these various components being linked to the same internal bus of the same control microprocessor (5, 15, 25).

5. Sub-system according to Claim 3, characterised in that the functional sub-assembly H specific to the host adapter (HA₁) comprises the various modules as follows:
- the module M₀ concerning the operating system of the host adapter (HA₁) organising the linking work between the various modules making up the sub-assembly H,
- the module M₁ for managing the transfers of information according to the host adapter and the other structural elements via the parallel-type bus to which the adapter is linked (B₁, B₂),
- the module M₂ for managing the host interface (IH₁),
- the module M₃ for managing the stack of commands contained in the RAM-type memory (RAH₁) of the host adapter (HA₁),
- the module M₄ for executing commands addressed to the control units UC₁ and UC₂ by the host H₁,
- the module M₅ for receiving commands from the central host (H₁) intended for the mass memory (BMD₁) and for routing these commands to the mass memory adapter (DA₁),
- the module M₆ for restarting and for processing errors when an error is detected in one or other of the hardware components of the host adapter (HA₁),
- the module for managing the buffer memory (MTH₁) of the host adapter (HA₁).

6. Sub-system according to Claim 5, characterised in that the functional sub-assembly D specific to the mass memory adapter (DA₁) comprises the various modules:
- M₀, M₁, M₃, M₆, M₁₀ which are identical to those of the host adapter, and
- the module M₉ for interpreting commands from the central host to the mass memory (BDM₁).

7. Sub-system according to Claim 5, characterised in that the electronic disk units sub-assembly comprises the modules:
- M₀, M₁, M₃, M₆, M₁₀ which are identical to those of the host adapter (HA₁), and
- the module M₉ for interpreting commands from the central host to the corresponding electronic disk unit.

8. Sub-system according to Claim 5, characterised in that the sub-assembly C of the cache memories (CA₁, CA₂) comprises the modules M₀, M₁ and the module M₁₁ for managing the tables of the cache memories (CA₁, CA₂).

9. Sub-system according to Claim 5, characterised in that the functional sub-assembly P of the central processors (PR₁, PR₂) comprises, in addition to the modules M₀ and M₁:
- the module M₁₂ for initialising the corresponding control units (UC₁, UC₂),
- the module M₁₃ for communication between the two control units which are responsible, in particular, for establishing exchanges of information between units when one of the structural elements making up one of the units is unavailable,
- the module M₁₄ for managing the power supply (ALIM₁, ALIM₂) of the control unit which is controlled by the corresponding central processor,
- the module M₁₆ for saving the context of the control unit controlled by the corresponding central processor in the event of an interruption in the supply voltage,
- the module M₁₇ for restarting write or read operations in the corresponding electronic disk unit after a voltage interruption has taken place, accompanied by the saving of the context used by the module M₁₆,
- the module M₁₈ for managing the interface between the back-up disk memory (MSD₁) and the associated central processor (PR₁).
